# EUROPÄISCHE PATENTSCHRIFT

(11) **EP 3 888 500 B1**
(45) Veröffentlichungstag und Bekanntmachung des Hinweises auf die Patenterteilung: **25.09.2024**
(21) Anmeldenummer: 21162544.7
(22) Anmeldetag: 15.03.2021
(51) Int. Cl.: A47D 9/04, A47D 9/02, B62B 9/22

(54) **VORRICHTUNG ZUM BEWEGEN EINES OBJEKTS**
DEVICE FOR MOVING AN OBJECT
DISPOSITIF DE DÉPLACEMENT D'UN OBJET

(30) Priorität: 02.04.2020 DE 102020109181
(43) Veröffentlichungstag der Anmeldung: 06.10.2021
(73) Patentinhaber: Krauss, Sven, 35305 Grünberg (DE)
(72) Erfinder: Krauss, Sven, 35305 Grünberg (DE)
(74) Vertreter: Haarpatent Patentanwälte Krämer Meyer

(56) Entgegenhaltungen:
- DE-U1- 29 817 858
- GB-A- 2 132 080
- US-A1- 2011 204 689
- US-A1- 2020 037 783
- US-A1- 2020 069 073

## Beschreibung

Die Erfindung betrifft eine Vorrichtung, die an ein Objekt befestigbar ist, das bewegt werden soll und umfasst ein Pendel, das von einer Antriebseinheit bewegt wird.

Es sind Wipp- und Schaukelvorrichtungen bekannt, die dazu eingerichtet sind, eine Wippe, in der ein Kind liegen oder sitzen kann, durch eine Pendelvorrichtung zu bewegen DE 4328473 C2 beschreibt eine Schaukelvorrichtung für Kleinkinder, in der das Kind mit den eigenen Füßen eine Bewegung auslöst, die durch eine Federung weitergeführt wird.

Aus DE 29903933 U1 ist eine Vorrichtung zum Bewegen des Säuglings bekannt, bei der der Säugling in einem Tuch liegt, das an einer Feder befestigt ist, so dass horizontale und/oder vertikale Bewegungen möglich sind.

EP 0455165 B1 ist eine Babyhopseinrichtung bekannt, der mit einer Über - Kopf Aufhängung an einem Gestell befestigt ist und dem Babyvertikales Hopsen ermöglicht. Der Säugling sitzt dabei in einem Sitzgurt.

Weiterhin sind aus US 2 627 614 A, US 2011 / 0 204 689 A1 und US 3 112 814 A Vorrichtungen bekannt, die auf Ständern stehen und an die eine Wiege angehängt wird. Die Wiege wird durch die Bewegung eines Pendels bewegt.

DE 298 17 858 U1 offenbart eine gattungsgemäße Vorrichtung zum Bewegen eines Bettes. Die Vorrichtung wird mit einer Halterung am Bett befestigt und umfasst eine Exzentermasse oder eine unrund laufende Masse, die durch einen Elektromotor angetrieben wird. Vibrationen werden durch die unrunden Bewegungen erzeugt.

GB 2 132 080 A beschreibt eine Vorrichtung mit einer rotierenden Exzentermasse, die von einem Elektromotor drehend angetrieben wird. Auch hier werden durch die ungleichmäßige Bewegung der Masse Vibrationen erzeugt. US 2020/069073 A1 zeigt eine Schaukelvorrichtung, die an einer Hängematte befestigt werden kann.

Nachteilig bei den bekannten Vorrichtungen ist, dass diese fest mit dem Wiegeobjekt verbunden sind und somit nicht flexibel einsetzbar sind. Außerdem können die bekannten Vorrichtungen nicht an unterschiedlich gestaltete zu wiegende Objekte befestigt werden. Zudem benötigen die Vorrichtungen aus dem Stand der Technik in der Regel einen Standplatz.

Der Erfindung liegt die Aufgabe zugrunde, eine alternative Vorrichtung zum Wippen eines Kindes oder Säuglings bereitzustellen, die universell einsetzbar und schnell und einfach an verschiedenartige Wiegeobjekte anbringbar ist. Gelöst wird die Aufgabe durch die Lehre des Anspruchs 1. Vorteilhafte Ausgestaltungen ergeben sich aus den abhängigen Ansprüchen.

Die Aufgabe wird erfindungsgemäß dadurch gelöst, dass eine Vorrichtung zum Bewegen eines Wiegeobjekts bereitgestellt wird, mit einer Halterung zur Anbringung der Vorrichtung an dem zu bewegenden Objekt, wobei die Vorrichtung an dem Wiegeobjekt frei anordbar ist und mit einem Gehäuse, das eine Antriebseinheit und ein Stangenpendel mit einem Pendelgewicht umfasst, wobei das Stangenpendel mit der Antriebseinheit derart wirkverbunden ist, dass das Pendelgewicht durch von der Antriebseinheit initiierte Bewegungen in einer Ebene auslenkbar ist, wodurch die Vorrichtung sich auf das Wiegeobjekt auswirkende Bewegungsimpulse erhält, wobei die Antriebseinheit derart gesteuert ist, dass das Pendelgewicht in zwei entgegengesetzte Richtungen in zwei Endpositionen bewegbar ist. Ein wesentlicher Vorteil der erfindungsgemäßen Vorrichtung ist, dass diese mobil verwendbar ist und ohne Standbeine oder sonstige Stabilisierung in einfacher Weise an ein zu wiegendes Objekt angebracht werden kann. Die Vorrichtung kann frei und vorallem flexibel an einem zu wiegendem Objekt befestigt werden, ohne dass hierfür viel Platz benötigt wird, so dass die Vorrichtung platzsparend verwendbar ist.

Erfindungsgemäß ist vorgesehen, dass eine erste von der Antriebseinheit initiierte Bewegung zu einer Auslenkung des Pendelgewichts in eine erste Richtung führt und eine zweite von der Antriebseinheit initiierte Bewegung, die eine Bewegungsrichtung aufweist, die der ersten initiierten Bewegung entgegengerichtet ist, zu einer Auslenkung des Pendelgewichts in eine zweite Richtung führt, die der ersten Auslenkungsrichtung entgegengesetzt ist, so dass das Pendelgewicht in einer Ebene bewegbar ist. Die Antriebseinheit bewegt das Pendel in eine Richtung zu einer Endposition hin.

Erfindungsgemäß wird das Pendel ausschließlich von der Antriebseinheit bewegt und zwar zu einer ersten Endposition und zu einer zweiten, der ersten entgegengesetzten Endposition, wobei beide Endpositionen in einer Ebene liegen. Hierbei kann die Antriebseinheit beispielsweise über ein Relais derart gesteuert sein, dass die Bewegungsrichtung der Antriebseinheit beim Erreichen einer einstellbaren Endposition umgekehrt wird und das Pendel in die entgegengesetzte Richtung bewegt wird.

Im Sinne der Erfindung umfasst ein Wiegeobjekt Sitze, Schalen oder Betten zur Aufnahme eines Säuglings oder eines Kleinkinds, in die ein Säugling oder Kleinkind reingesetzt oder reingelegt werden können. Hierunter zu subsumieren sind beispielsweise Autositze für Kinder oder Kleinkinder, Autositze für Säuglinge (wie Babyschalen), Wippen oder Kinderwagen mit einer Aufnahme für Säuglinge oder Kleinkinder. Wenn im Folgenden eine Ausgestaltung der Vorrichtung für ein spezielles Wiegeobjekt erläutert wird, erfolgt dies nur exemplarisch und die Ausgestaltung ist ebenso auf die Wiegeobjekte im Allgemeinen anwendbar.

Die Vorrichtung kann in einfacher Weise mittels der Halterung an dem Sitz befestigt werden. Die Antriebseinheit bewegt das Stangenpendel, was wiederum einen Bewegungsimpuls auf den Sitz überträgt und zu einer Wippbewegung des Sitzes führt. Ein wesentlicher Vorteil der Erfindung ist, dass die Vorrichtung in einfacher Weise z. B. an einem Sitz befestigbar ist. Die Vorrichtung ist somit mobil und universell einsetzbar, da sie an verschiedenartige Sitze oder Schalen oder sogar Kinderwagen einfach befestigbar ist. Als Steuereinheit kann ein Pulsgenerator in Verbindung mit einem Servotester oder mehreren Servotestern Verwendung finden. Es kann auch vorgesehen sein, dass als Antriebseinheit ein Servo, ein Modellbauservo oder ein vergleichbarer Bewegungsgeber verwendet wird. Außerdem kann die Antriebseinheit eine Stromversorgung, wie beispielsweise einen Akku oder Batterien aufweisen. Es kann jedoch auch vorteilhaft sein, dass die Vorrichtung mit einem USB-Anschluss mit Strom versorgt wird.

Erfindungsgemäß ist vorgesehen, dass die Antriebseinheit derart gesteuert ist, dass das Pendelgewicht in zwei entgegengesetzten Richtungen zwischen zwei Endpositionen bewegbar ist. Die Antriebseinheit kann derart gesteuert sein, dass entweder das Pendelgewicht aktiv in zwei entgegengesetzte Richtungen bewegt wird oder dass sich das Pendelgewicht aus einer Endposition selbstständig wieder in eine Ruheposition bzw. in die der Endposition entgegengesetzte Richtung bewegt. Bei der ersten Variante erfolgt insbesondere die vollständige Pendelbewegung durch die von der Antriebseinheit initiierten Bewegungen. Wogegen bei der zweiten, nicht erfindungsgemäßen, Variante die Antriebseinheit die Pendelauslenkung zumindest zum Teil initiiert und das Pendelgewicht nach Auslenkung wenigstens zurück in seine Ruheposition schwingt.

In einer Ausgestaltung ist vorgesehen, dass die Vorrichtung eine mit der Antriebseinheit verbundene Steuereinheit aufweist. Die Steuereinheit ermöglicht die Einstellung der Wippdauer. Das heißt, es kann eingestellt werden, wie lange das Pendel bewegt wird, was im Grunde einer Abstellautomatik entspricht. In einer Ausgestaltung ist ferner vorgesehen, dass mittels der Steuereinheit die Größe der Auslenkung des Pendelgewichts und somit die Wippstärke eingestellt werden kann. Dies kann insbesondere dann vorteilhaft sein, wenn der zu bewegende Sitz oder Wagen ein hohes Gewicht aufweist und somit ein stärkerer Bewegungsimpuls für das Wippen notwendig ist.

Es kann bevorzugt sein, dass Antriebseinheit und Steuereinheit in einer Servoeinheit kombiniert sind. Die Kombination beider Einheiten in einer Servoeinheit ermöglicht einen kompakten Bau der Vorrichtung, die dann durch die Steuereinheit einstellbar, bzw. steuerbar ist.

Des Weiteren kann die Steuereinheit als Mikrokontroller ausgestaltet sein. Hier ist insbesondere ein E/A-Board mit einem Mikrocontroller und analogen und digitalen Ein- und Ausgängen bevorzugt. Durch die Verwendung eines Mikrokontrollers kann die Steuerung in einfacher Weise programmiert und bei Bedarf angepasst werden. Es können beispielsweise unterschiedliche Programme zur Verfügung stehen, die durch entsprechend angelegte Knöpfe auswählbar sind. Hierbei kann es sich beispielsweise um verschiedene Schaukelprogramme handeln, die je nach Verwendung der Vorrichtung an einer Wippe oder an einem sonstigen Gegenstand unterschiedliche Bewegungen des Pendels steuern.

Die Halterung kann vorteilhafterweise als Bestandteil des Gehäuses ausgestaltet sein. Für diese Ausgestaltung wird somit keine separate Halterung benötigt, was die Handhabung der Vorrichtung vereinfacht.

Um eine universelle Halterung bereitzustellen, die einfach und schnell an verschiedene Sitze, Wippen oder Wagen anbringbar ist, kann die Halterung als verschließbare Schelle ausgestaltet sein. Die Schelle lässt sich schnell und einfach von Hand öffnen und wieder schließen. Außerdem ist die Öffnung der Schelle derart einstellbar, dass sie an einen kleinen oder großen Durchmesser anbringbar ist.

Um eine gleichmäßige und harmonische Bewegung des Pendels zu erreichen, kann vorgesehen sein, dass sich der Mittelpunkt der Halterung und die Längsachse des Pendels im Wesentlichen auf der Längsachse des Gehäuses befinden. Es hat sich herausgestellt, dass hierdurch eine harmonische Wippbewegung verursacht wird.

Um die Bewegung des Pendels in einer Ebene zu halten und kreisende Bewegungen zu vermeiden, ist in einer Ausgestaltung vorgesehen, dass im Gehäuse mindestens ein Gestänge vorliegt, das derart eingerichtet ist, dass es die Bewegung des Pendels begrenzt und ein Schleifen oder Anstoßen des Pendels an eine Gehäusewand verhindert. Das Gestänge ist im Wesentlichen um das Pendel herum errichtet, zum Beispiel als dünnes Metallgeflecht und liegt in zwei parallelen Ebenen vor, zwischen denen sich das Pendel bewegt. Hierdurch wird verhindert, dass das Pendel z. B. durch einen Stoß aus seiner linearen Bahn gelenkt wird.

Das Gehäuse kann vorteilhafterweise mehrteilig aufgebaut sein. Diesbezüglich ist es gerade für den Zusammenbau der Vorrichtung vorteilhaft, wenn das Gehäuse eine Vorder- und/oder eine Rückseite umfasst. Das Gehäuse kann aus einem Kunststoff hergestellt sein, da hierdurch die Vorrichtung ein geringes Gewicht aufweist. Alternativ können auch leichte Metalle, wie z. B. Aluminium als Gehäusematerial in Frage kommen.

Die Vorrichtung wird über die Halterung an z. B. einem Kinderwagen befestigt. Als zusätzliche Sicherung kann es vorteilhaft sein, dass an dem Gehäuse ein Sicherungsseil angebracht ist, mit dem die Vorrichtung zusätzlich zur Halterung an dem Objekt befestigbar ist. Hierdurch wird sichergestellt, dass die Vorrichtung nicht beschädigt wird, wenn sich die Halterung löst. Außerdem wird somit verhindert, dass die Vorrichtung auf z. B. ein unter der Vorrichtung befindliches Kind fällt.

Die Erfindung betrifft des Weiteren ein System zum Wiegen oder Wippen eines Sitzes umfassend eine zuvor beschriebene Vorrichtung und einen Verlängerungsadapter, der an einem ersten Ende einen Adapter zur Befestigung des Verlängerungsadapters an der Halterung und an einem, dem ersten Ende gegenüberliegenden zweiten Ende eine Befestigungsschelle zur Befestigung des Verlängerungsadapters an dem Objekt aufweist, wobei zwischen dem ersten und dem zweiten Ende ein Federelement vorliegt. Das System ermöglicht die Bewegung auch von schwereren Objekten, da durch den Verlängerungsadapter im Grunde die Länge des Hebels, das heißt, die Länge des Stangenpendels vergrößert und der Bewegungsimpuls verstärkt wird. Die Befestigungsschelle kann in einfacher Weise geöffnet und geschlossen werden und ermöglicht so eine schnelle Verbindung mit einem zu wippenden Objekt. Zwischen dem Adapter und der Befestigungsschelle liegt ein Federelement vor, das in einer Ausgestaltung als Schraubenzugfeder ausgestaltet ist. Des Weiteren kann das Federelement auch als kugelgelagertes Federgelenk mit zum Beispiel einer Drehfeder, Schenkel- oder Rückholfeder ausgestaltet sein. Durch das Federelement wird eine harmonische Wippbewegung erreicht.

Die Erfindung wird nachfolgend anhand von Ausführungsbeispielen der Erfindung näher erläutert, die in der Zeichnung dargestellt sind. Es zeigen
- Figur 1: eine perspektivische Ansicht einer Vorrichtung,
- Figur 2: eine perspektivische Ansicht einer geöffneten Vorrichtung,
- Figur 3: eine perspektivische Ansicht einer Vorrichtung mit geöffneter Halterung und Verlängerungsadapter,
- Figur 4: eine perspektivische Ansicht eines bevorzugten Systems mit Vorrichtung und Verlängerungsadapter und
- Figur 5: eine perspektivische Ansicht eines speziellen Verlängerungsadapters mit kugelgelagertem Gelenk u. Drehfeder.

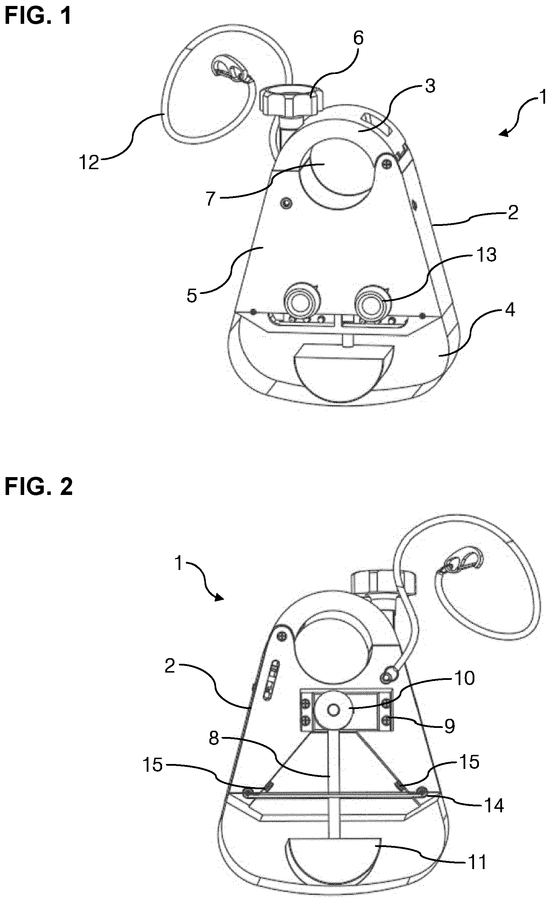

Figur 1 zeigt eine perspektivische Ansicht einer Vorrichtung und Figur 2 eine perspektivische Ansicht einer geöffneten Vorrichtung. Die Vorrichtung 1 umfasst ein Gehäuse 2 mit einer Halterung 3, die in Gestalt einer Schelle an dem oberen Ende des Gehäuses 2 vorliegt. Das Gehäuse 2 kann einteilig oder mehrteilig gestaltet sein, wobei es vorteilhaft ist, wenn der vom Gehäuse 2 geformte Innenraum 4 zumindest zum Teil abgedeckt ist, wie beispielsweise in Figur 1 mit der Schutzabdeckung 5 angedeutet ist.

Die Halterung 3 kann beispielsweise mit einer Sterngriffmutter 6 geöffnet und geschlossen werden. Die Form der Halterung 3 ist vornehmlich rund, mit einem rohrförmigen Durchgang 7, der der Durchführung eines Rahmens des Wiegeobjekts dient. In den Durchgang 7 können Gummielemente eingelegt werden, um eine Beschädigung des umschlossenen Rahmens zu vermeiden, an dem die Halterung 3 angebracht wird. Es können auch verschieden dicke gummierte Innenringe für die Halterung 3 angeboten werden, die je nach Bedarf in den Durchgang 7 einlegbar sind und eine Anpassung des Durchmessers bewirken.

In dem Gehäuse 2 sind ein Stangenpendel 8 und eine Antriebseinheit 9 beherbergt, die gut in Figur 2 zu sehen sind. Eine Aufhängung 10 des Stangenpendels 8 ist mit der Antriebseinheit 9 verbunden, wobei das Pendelgewicht 11 bis in das unterste Ende des Gehäuses 2 ragt. Den unteren Abschluss des Gehäuses 2 bildet in einer Ausgestaltung eine Halbschale aus Kunststoff, welche das Pendel 8 gegen Berührung schützt. Das obere Ende des Gehäuses 2 kann ebenfalls durch eine Schale gebildet sein.

Um ein Herunterfallen der Vorrichtung 1 durch eine defekte Schelle 3 zu verhindern, kann ein Sicherungsseil 12 vorgesehen sein, welches mit einem Ende an der Vorrichtung fest und mit seinem zweiten Ende am Wiegeobjekt reversibel befestigbar ist. Hierfür kann am zweiten Ende ein entsprechendes Befestigungsmittel vorliegen.

An der Schutzabdeckung 5 können Regelelemente 13 angebracht sein, die eine Steuerung und/oder Regelung der Vorrichtung 1 ermöglichen. Ist die Antriebseinheit 9 mit einer Steuerelektronik in Gestalt einer Servoeinheit kombiniert, sind weitere Einstellungen der Vorrichtung 1, neben einem einfachen Ein- und Ausschalten möglich. Die Antriebseinheit 9 kann auch mit einem Mikrokontroller verbunden sein, bzw. von diesem gesteuert werden. Mit den Regelelementen 13 kann zum Beispiel die Auslenkung des Pendels 8 eingestellt werden, wobei beispielsweise mit jedem Regelelement 13 ein Endpunkt auf dem Gesamtstellweg frei wählbar ist. Ferner können Druckknöpfe vorgesehen sein, über die Programme wählbar sind. Diese Programme können je nach Verwendung der Vorrichtung 1 zum Beispiel die Geschwindigkeit der Pendelbewegung und/oder die maximale Auslenkung des Pendels 8 automatisch steuern. Ein Benutzer kann somit schnell das Wippen der Vorrichtung an den Gegenstand anpassen.

Es ist dem Anwender einfach möglich, die Vorrichtung 1 und das Wiegeobjekt optimal aufeinander abzustimmen und zudem die Intensität der Wiegebewegung zu variieren. Mit einem Ein / Aus Taster wird die Vorrichtung 1 ein- bzw. ausgeschaltet. Die Servoeinheit bewegt das Pendel 8 periodisch, innerhalb der mittels der Regelelemente 13 eingestellten Endpositionen, hin und her bzw. lediglich zu einer Endposition hin, wenn ein Regelelement 13 weggeschaltet-, bzw. in der Ausgestaltung der Vorrichtung 1 gänzlich darauf verzichtet wurde. In dem Fall bewirkt dann die Schwerkraft die Rückkehr des Pendelgewichts 11 zum Ausgangspunkt, bzw. in die Ruheposition. Die Periode weist in jedem Fall einen in der Elektronik festeingestellten oder variablen Wert auf. Die durch die Beschleunigung des Pendels 8 entstehende Kraft überträgt sich auf das zu bewegende Objekt.

Das Pendel 8 wird in einer Ausgestaltung zumindest bereichsweise von zwei Gestängen 14 aus Draht eingefasst, welche ein Schleifen des Pendels 8 an dem Gehäuse 2 verhindern und dadurch einen Betrieb der Vorrichtung 1 auch in leicht horizontaler Lage ermöglichen. Die Drahtgestänge 14 sind im unterem Bereich des Gehäuses 2 angebracht und können aus einem inneren und äußeren Draht gebildet sein. Während der innere Draht lediglich in eine dafür vorgesehene Mulde eingeschoben ist, ist der äußere Draht genauso mit dem Gehäuse 2 verschraubt wie zwei Puffer 15, die die linke und rechte Begrenzung des Pendelweges bilden. Dadurch wird ein zu hartes und lautes Anschlagen des Pendels 8 am Gehäuse 2 verhindert. Die Drahtgestänge 14 begrenzen also den Weg des Pendels 8, bzw. verhindern, dass das Pendel 8 bei einer Neigung der Vorrichtung 1 nicht gegen das Gehäuse 2 schlägt. Des Weiteren können nicht dargestellte Sensoren, wie zum Beispiel Lage- und/oder Bewegungssensoren vorgesehen sein, die die Lage bzw. Position und somit Auslenkung des Pendels 8 feststellen und an die Steuereinheit oder den Mikrokontroller übermitteln.

Das Pendel 8, bzw. dessen Aufhängung 10 kann in einem im Gehäuse 2 angeordneten Lager, wie zum Beispiel einem Kugellager gelagert sein, so dass eine Kippbewegung der Aufhängung 10 bei einer geneigten, also nicht vertikalen Ausrichtung des Gehäuses 2 verhindert wird.

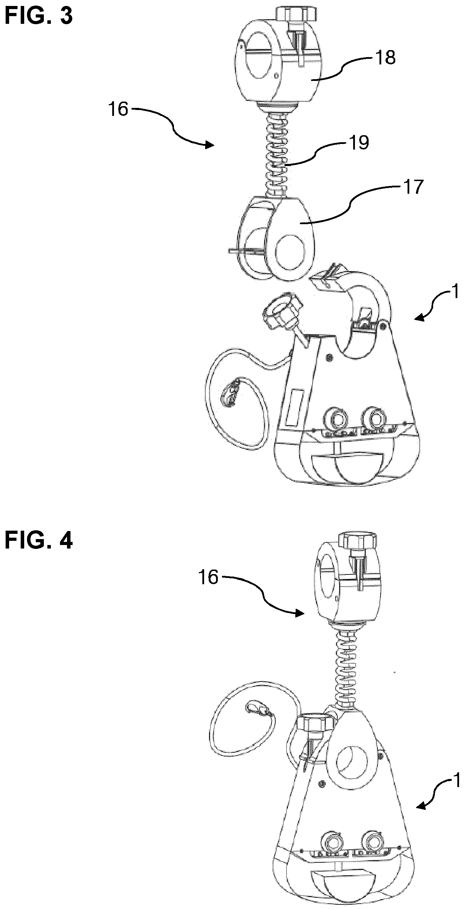

Figur 3 stellt eine perspektivische Ansicht einer Vorrichtung mit geöffneter Halterung und Verlängerungsadapter und Figur 4 eine perspektivische Ansicht eines bevorzugten Systems mit Vorrichtung und Verlängerungsadapter dar. Um den Schaukeleffekt bei schwer zu bewegenden Objekten zu verstärken, kann ein Verlängerungsadapter 16 vorgesehen sein. Der Verlängerungsadapter 16 wird über einen zylindrisch ausgebildeten und an den Durchmesser des Durchgangs 7 der Halterung 3 angepassten Adapter 17, der an einem ersten Ende des Verlängerungsadapters 16 angeordnet ist, mit der Halterung 3 der Vorrichtung 1 verbunden.

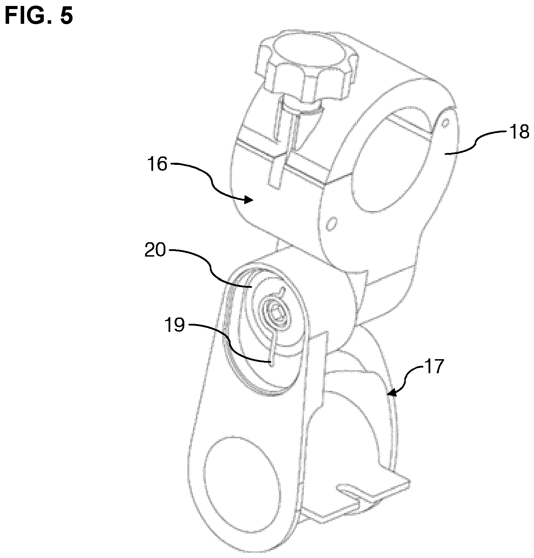

An einem dem ersten Ende gegenüberliegenden zweiten Ende des Verlängerungsadapters 16 ist eine Befestigungsschelle 18 zur Befestigung des Verlängerungsadapters 16 an dem Wiegeobjekt vorgesehen, wobei zwischen dem ersten und dem zweiten Ende ein Federelement 19 vorliegt. In dem dargestellten Ausführungsbeispiel ist das Federelement 19 beispielhaft als Schraubenzugfeder ausgebildet. Es kann aber auch eine anders gestaltete Feder zum Einsatz kommen. Das Federelement 19 kann auch als kugelgelagertes Gelenk mit Drehfeder ausgebildet sein, was beispielhaft in Figur 5 gezeigt ist. Der Vorteil hiervon ist, dass die Bewegung des Federelements 19 in dieser Ausgestaltung gerichteter ist und die Ausgestaltung insgesamt kürzer und kompakter gestaltet ist. Die Befestigungsschelle 18 ist im Wesentlichen so aufgebaut wie die Halterung 3 der Vorrichtung 1 und weist ebenfalls einen im Wesentlichen rohrförmigen Durchgang auf, dessen Durchmesser mithilfe von gummierten Elementen veränderbar ist. Eine Sterngriffmutter dient dem Öffnen und Schließen der Schelle 18. Mithilfe der Befestigungsschelle 18 kann der Verlängerungsadapter 16 einfach und schnell an zum Beispiel einem Kinderwagen angebracht werden. Figur 4 zeigt die Vorrichtung 1 verbunden mit dem Verlängerungsadapter 16.

## Patentansprüche

1. Vorrichtung (1) zum Bewegen eines Wiegeobjekts, mit einer Halterung (3) zur Anbringung der Vorrichtung (1) an dem zu bewegenden Objekt, wobei die Vorrichtung (1) an dem Wiegeobjekt frei anordbar ist und mit einem Gehäuse (2), das eine Antriebseinheit (9) und ein Stangenpendel (8) mit einem Pendelgewicht (11) umfasst, wobei das Stangenpendel (8) mit der Antriebseinheit (9) verbunden ist und die Antriebseinheit (9) das Stangenpendel (8) zu einer ersten Endposition und zu einer zweiten, der ersten entgegengesetzten Endposition bewegt, wobei beide Endpositionen in einer Ebene liegen, wodurch die Vorrichtung (1) sich auf das Wiegeobjekt auswirkende Bewegungsimpulse erhält.

2. Vorrichtung (1) nach Anspruch 1, **dadurch gekennzeichnet, dass** die Vorrichtung (1) eine mit der Antriebseinheit (9) verbundene Steuereinheit aufweist.

3. Vorrichtung (1) nach einem der vorhergehenden Ansprüche, **dadurch gekennzeichnet, dass** das Pendel (8) in einem in dem Gehäuse (2) angeordneten Lager gelagert ist.

4. Vorrichtung (1) nach einem der vorhergehenden Ansprüche, **dadurch gekennzeichnet, dass** die Antriebseinheit (9) ein Servo ist.

5. Vorrichtung (1) nach Anspruch 2, **dadurch gekennzeichnet, dass** die Steuereinheit als Mikrokontroller ausgestaltet ist.

6. Vorrichtung (1) nach einem der vorhergehenden Ansprüche, **dadurch gekennzeichnet, dass** die Größe der Auslenkung des Pendelgewichts (11) einstellbar ist.

7. Vorrichtung (1) nach einem der vorhergehenden Ansprüche, **dadurch gekennzeichnet, dass** die Halterung (3) als Bestandteil des Gehäuses (2) ausgestaltet ist.

8. Vorrichtung (1) nach einem der vorhergehenden Ansprüche, **dadurch gekennzeichnet, dass** die Halterung (3) als verschließbare Schelle ausgestaltet ist.

9. Vorrichtung (1) nach einem der vorhergehenden Ansprüche, **dadurch gekennzeichnet, dass** sich der Mittelpunkt der Halterung (3) und die Längsachse des Pendels (8) im Wesentlichen auf der Längsachse des Gehäuses (2) befinden.

10. Vorrichtung (1) zum nach einem der vorhergehenden Ansprüche, **dadurch gekennzeichnet, dass** im Gehäuse (2) mindestens ein Gestänge (14) vorliegt, das derart eingerichtet ist, dass es die Bewegung des Pendels (8) begrenzt und ein Schleifen oder Anstoßen des Pendels (8) an eine Gehäusewand verhindert.

11. Vorrichtung (1) nach einem der vorhergehenden Ansprüche, **dadurch gekennzeichnet, dass** an dem Gehäuse (2) ein Sicherungsseil (12) angebracht ist, mit dem die Vorrichtung (1) zusätzlich zur Halterung (3) an dem Wiegeobjekt befestigbar ist.

12. System zum Wiegen oder Wippen eines Sitzes umfassend eine Vorrichtung (1) nach den vorhergehenden Ansprüchen 1 bis 11 und einen Verlängerungsadapter (16), der an einem ersten Ende einen Adapter (17) zur Befestigung des Verlängerungsadapters (16) an der Halterung (3) und an einem, dem ersten Ende gegenüberliegenden zweiten Ende eine Befestigungsschelle (18) zur Befestigung des Verlängerungsadapters (16) an dem Wiegeobjekt aufweist, wobei zwischen dem ersten und dem zweiten Ende ein Federelement (19) vorliegt.

13. System nach Anspruch 12, **dadurch gekennzeichnet, dass** das Federelement (19) eine Schraubenzugfeder oder eine, in einem kugelgelagerten Gelenk verbaute Drehfeder ist.

## Claims

1. Device (1) for moving a weighing object, with a holder (3) for mounting the device (1) on the object to be moved, wherein the device (1) can be freely arranged on the weighing object and is provided with a housing (2) containing a drive unit (9) and a rod pendulum (8) with a pendulum weight (11), whereby the rod pendulum (8) is connected to the drive unit (9) and the drive unit (9) drives the rod pendulum (8) to a first end position and to a second end position opposite to the first end position with both end positions lying in one plane, whereby the device (1) receives movement impulses that affect the weighing object.

2. Device (1) according to claim 1, **characterised in that** the device (1) has a control unit connected to the drive unit (9).

3. Device (1) according to one of the preceding claims, **characterised in that** the pendulum (8) is mounted in a bearing arranged in the housing (2).

4. Device (1) according to one of the preceding claims, **characterised in that** the drive unit (9) is a servo.

5. Device (1) according to claim 2, **characterised in that** the control unit is designed as a microcontroller.

6. Device (1) according to one of the preceding claims, **characterised in that** the magnitude of the deflection of the pendulum weight (11) can be set.

7. Device (1) according to one of the preceding claims, **characterized in that** the holder (3) is designed as a component of the housing (2).

8. Device (1) according to one of the preceding claims, **characterized in that** the holder (3) is designed as a lockable clip.

9. Device (1) according to one of the preceding claims, **characterized in that** the center point of the holder (3) and the longitudinal axis of the pendulum (8) are essentially located on the longitudinal axis of the housing (2).

10. Device (1) according to one of the preceding claims, **characterized in that** at least one linkage (14) is present in the housing (2), which is set up in such a way that it limits the movement of the pendulum (8) and prevents the pendulum (8) from grinding or bumping against a housing wall.

11. Device (1) according to one of the preceding claims, **characterized in that** a safety cable (12) is attached to the housing (2), with which the device (1) can be attached to the weighing object in addition to the holder (3).

12. System for weighing or rocking a seat, comprising a device (1) according to the preceding claims 1 to 11 and an extension adapter (16) which has at a first end an adapter (17) for fastening the extension adapter (16) to the holder (3) and at a second end, opposite the first end, a fastening clip (18) for fastening the extension adapter (16) to the weighing object, whereby a spring element (19) is present between the first and the second end.

13. System according to claim 12, **characterized in that** the spring element (19) is a helical tension spring or a torsion spring installed in a ball-bearing mounted joint.

## Revendications

1. Dispositif (1) pour mouvoir un objet à bercer, avec un support (3) pour monter le dispositif (1) sur l'objet à mouvoir, le dispositif (1) pouvant être disposé librement sur l'objet à bercer, et avec un boîtier (2) qui comprend une unité d'entraînement (9) et un pendule à tige (8) muni d'une masselotte (11), le pendule à tige (8) étant relié à l'unité d'entraînement (9), et l'unité d'entraînement (9) déplaçant le pendule à tige (8) vers une première position d'extrémité et vers une deuxième position d'extrémité opposée à la première, les deux positions d'extrémité étant situées dans un plan, ce qui permet au dispositif (1) de recevoir des impulsions de mouvement qui agissent sur l'objet à bercer.

2. Dispositif (1) selon la revendication 1, **caractérisé en ce que** le dispositif (1) est muni d'une unité de commande reliée à l'unité d'entraînement (9).

3. Dispositif (1) selon l'une des revendications précédentes, **caractérisé en ce que** le pendule (8) est logé dans un palier disposé dans le boîtier (2).

4. Dispositif (1) selon l'une des revendications précédentes, **caractérisé en ce que** l'unité d'entraînement (9) est un servo.

5. Dispositif (1) selon la revendication 2, **caractérisé en ce que** l'unité de commande est conçue sous la forme d'un microcontrôleur.

6. Dispositif (1) selon l'une des revendications précédentes, **caractérisé en ce que** la valeur de la déviation de la masselotte (11) est réglable.

7. Dispositif (1) selon l'une des revendications précédentes, **caractérisé en ce que** le support (3) est conçu comme composant du boîtier (2).

8. Dispositif (1) selon l'une des revendications précédentes, **caractérisé en ce que** le support (3) est conçu comme un collier refermable.

9. Dispositif (1) selon l'une des revendications précédentes, **caractérisé en ce que** le centre du support (3) et l'axe longitudinal du pendule (8) se trouvent sensiblement sur l'axe longitudinal du boîtier (2).

10. Dispositif (1) selon l'une des revendications précédentes, **caractérisé en ce qu'**au moins une tringle (14) est présente dans le boîtier (2) et est agencée de manière à limiter le mouvement du pendule (8) et à empêcher le pendule (8) de frotter ou de heurter une paroi du boîtier.

11. Dispositif (1) selon l'une des revendications précédentes, **caractérisé en ce qu'**un câble de sécurité (12) est monté sur le boîtier (2), permettant de fixer le dispositif (1) à l'objet à bercer en plus du support (3).

12. Système de bercement ou de balancement d'un siège comprenant un dispositif (1) selon les revendications 1 à 11 précédentes et un adaptateur de rallonge (16) qui est muni à une première extrémité d'un adaptateur (17) pour fixer l'adaptateur de rallonge (16) sur le support (3) et à une deuxième extrémité opposée à la première extrémité d'un collier de fixation (18) pour fixer l'adaptateur de rallonge (16) sur l'objet à bercer, un élément ressort (19) étant présent entre la première et la deuxième extrémité.

13. Système selon la revendication 12, **caractérisé en ce que** l'élément ressort (19) est un ressort de traction hélicoïdal ou un ressort de torsion monté dans une articulation à roulement à billes.
